(19) **Europäisches Patentamt**
**European Patent Office**
**Office européen des brevets**

(11) **EP 4 184 393 B1**

(12) **EUROPEAN PATENT SPECIFICATION**

(45) Date of publication and mention
of the grant of the patent:
**26.02.2025 Bulletin 2025/09**

(51) International Patent Classification (IPC):
**G06N 3/0464** (2023.01)    **G06N 3/048** (2023.01)
**G06N 3/08** (2023.01)

(21) Application number: **22202928.2**

(52) Cooperative Patent Classification (CPC):
**G06N 3/0464; G06N 3/08;** G06N 3/048

(22) Date of filing: **21.10.2022**

(54) **METHOD AND SYSTEM FOR ATTENTIVE ONE SHOT META IMITATION LEARNING FROM VISUAL DEMONSTRATION**

VERFAHREN UND SYSTEM FÜR ATTENTIVES EINSCHUSS-METAIMITATIONSLERNEN AUS VISUELLER DEMONSTRATION

PROCÉDÉ ET SYSTÈME D'APPRENTISSAGE PAR MÉTA IMITATION D'UNE PRISE DE VUE À LA SUITE D'UNE DÉMONSTRATION VISUELLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.11.2021 IN 202121052813**

(43) Date of publication of application:
**24.05.2023 Bulletin 2023/21**

(73) Proprietor: **Tata Consultancy Services Limited**
**400021 Mumbai, Maharashtra (IN)**

(72) Inventors:
• **BHUTANI, Vishal Kumar**
**560066 Bangalore, Karnataka (IN)**
• **DUTTA, Anima Majumder**
**560066 Bangalore, Karnataka (IN)**
• **SINHA, Rajesh**
**201309 Noida, Uttar Pradesh (IN)**
• **DUTTA, Samrat**
**560066 Bangalore, Karnataka (IN)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**US-A1- 2018 144 248     US-A1- 2021 205 988**

**EP 4 184 393 B1**

**Description**

CROSS-REFERENCE TO RELATED APPLICATIONS AND PRIORITY

The present application claims priority to Indian application no. 202121052813, filed on November 17 2021.

TECHNICAL FIELD

The disclosure herein generally relates to the field of machine learning and, more particular, to a method and system for attentive one shot meta imitation learning from visual demonstration.

BACKGROUND

Imitation learning (IL) aims at enabling robots to learn skills from a human or a robot teacher efficiently by avoiding rigorous task specific robot programming which lacks adaptability. Due to the recent success of deep learning in the field of computer vision, there is a growing trend in the current IL research to learn control policy directly from video demonstrations which is otherwise known as visual imitation learning. The Meta-Imitation Learning (MIL) is a significant method in this field that allows a policy learned during training to be adapted quickly to solve a new task during the testing phase given one or more demonstrations. It, however, has the limitation of losing its meta-learning ability after learning a specific task.

Conventional methods improve the performance of various machine learning models by focusing on task-relevant aspects of the input observations. This, in turn, provides increased learning efficiency and robustness to distractors (e.g., background clutter). These have been successfully used to solve a wide range of problems such as language modeling, machine translation, image captioning and the like. However, application of attention to visual imitation has been very limited. Few conventional visual imitation methods utilize a transformer-based attention model to extract features from input images which are then used for learning the policy function. Hence, there is a challenge in investigating the effect of attention on the meta-learning models for visual imitation.

Document (US20210205988A1) describes a control system for a robotic device which comprising a task embedding network to receive one or more demonstrations of a task and to generate a task embedding. The task embedding comprises a representation of the task, and each demonstration comprises one or more observations of a performance of the task. The control system includes a control network to receive the task embedding from the task embedding network and to apply a policy to map a plurality of successive observations of the robotic device to respective control instructions for the robotic device. The policy applied by the control network is modulated across the plurality of successive observations of the robotic device using the task embedding from the task embedding network.

SUMMARY

Embodiments of the present disclosure present technological improvements as solutions to one or more of the above-mentioned technical problems recognized by the inventors in conventional systems. The invention is defined in the appended independent claims. Alternative embodiments of the invention are defined in the dependent claims.

The following detailed description and the accompanying drawings disclose a number of examples, aspects and embodiments provided for the understanding of the invention. The invention is disclosed in the passages identified as claimed embodiments, and the relative drawings if any, and its scope is defined uniquely by the appended claims.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for attentive one shot meta imitation learning from visual demonstration, in accordance with some embodiments of the present disclosure.
FIG. 2 is an exemplary flow diagram illustrating a method for attentive one shot meta imitation learning from visual demonstration, implemented by the system of FIG. 1, in accordance with some embodiments of the present disclosure.
FIG. 3A is an example overall architecture for the processor implemented method for attentive one shot meta imitation learning from visual demonstration implemented by the system of FIG. 1, in accordance with some embodiments of the present disclosure.
FIG. 3B is an example architecture for an attentive embedding network for the processor implemented method for attentive one shot meta imitation learning from visual demonstration implemented by the system of FIG. 1, in accordance with some embodiments of the present disclosure.

FIG. 3C is an example architecture for a control network for the processor implemented method for attentive one shot meta imitation learning from visual demonstration implemented by the system of FIG. 1, in accordance with some embodiments of the present disclosure.

FIG. 3D is an example architecture for an attention module for the processor implemented method for attentive one shot meta imitation learning from visual demonstration implemented by the system of FIG. 1, in accordance with some embodiments of the present disclosure.

FIGS. 4A to 4D illustrates experimental details for the processor implemented method for attentive one shot meta imitation learning from visual demonstration implemented by the system of FIG. 1, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for attentive one shot meta imitation learning from visual demonstration for applying a previously learned skill to a new task context by a robot. Initially, a plurality of images pertaining to a visual demonstration for a robot are received by the system. The plurality of images are sequential. Further, a plurality of vector embeddings are computed based on the plurality of images using a pretrained attentive embedding network. The pretrained attentive embedding network includes a first Convolutional Neural Network (CNN), a fully connected layer and a plurality of spatial attention modules. Finally, a control action is computed based on the plurality of vector embeddings, an image from the plurality of images, a robot joint state vector and robot joint velocity vector using a control network. The control network comprises a second CNN and a plurality of fully connected layers. The control network is connected to the attentive embedding using multiplicative spatial skip connections.

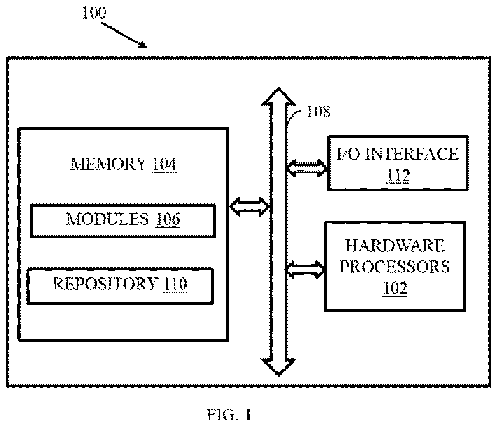

Referring now to the drawings, and more particularly to FIGS. 1 through 4D, where similar reference characters denote corresponding features consistently throughout the figures, there are shown preferred embodiments and these embodiments are described in the context of the following exemplary system and/or method.

FIG. 1 is a functional block diagram of a system 100 for attentive one shot meta imitation learning from visual demonstration, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

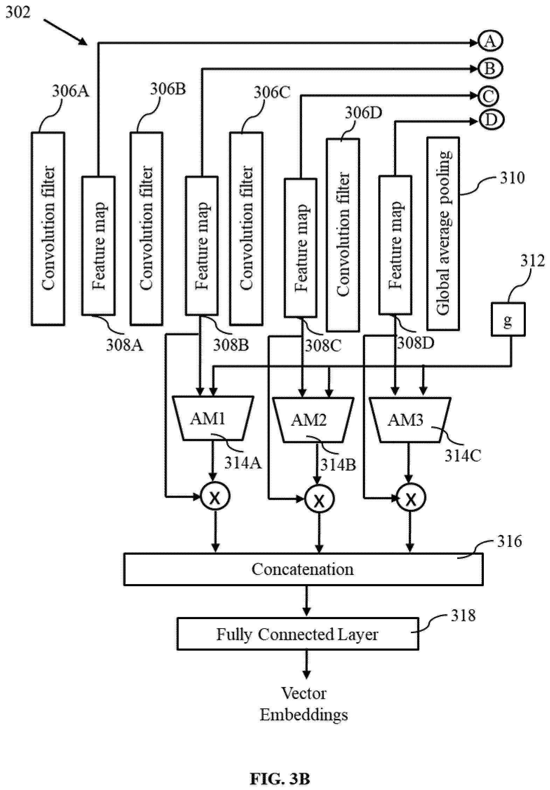

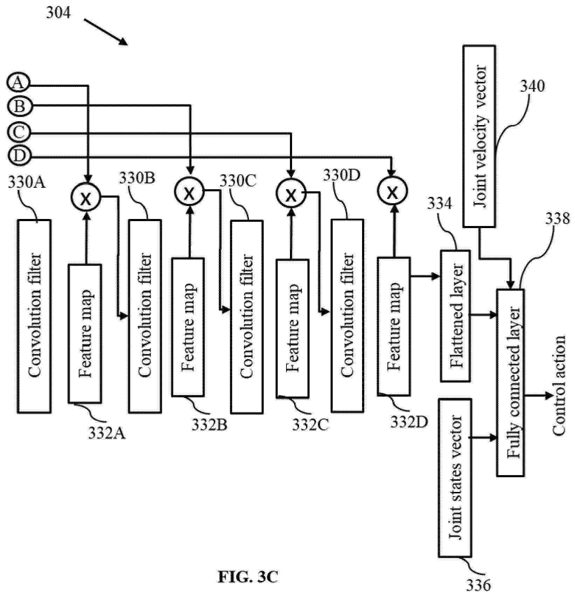

The plurality of modules 106 include programs or coded instructions that supplement applications or functions performed by the system 100 for attentive one shot meta imitation learning from visual demonstration. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for attentive one shot meta imitation learning from visual demonstration. In an embodiment, plurality of modules 106 includes an attentive embedding network (shown in FIG. 3B) and a control network (shown in FIG. 3C).

The data repository (or repository) 110 may include a plurality of abstracted piece of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

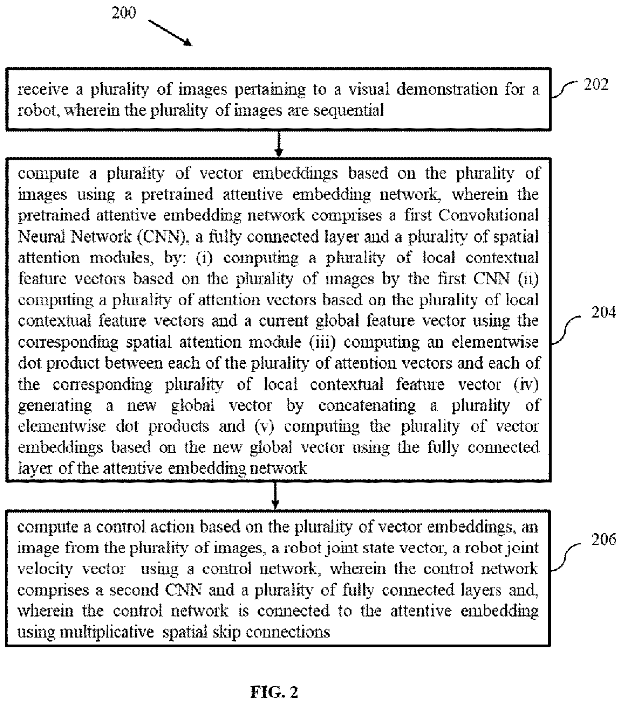

FIGS. 2 is an exemplary flow diagram illustrating a method 200 for attentive one shot meta imitation learning from visual demonstration implemented by the system of FIG. 1 according to a claimed embodiment.

In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 are configured by the programmed instructions to receive a plurality of images pertaining to a visual demonstration for a robot. The plurality of images are sequential demonstrating a corresponding action at each time stamp. For example, a plurality of image frames from a video demonstration are received as input.

At step 204 of the method 200, the one or more hardware processors 102 are configured by the programmed instructions to compute a plurality of vector embeddings based on the plurality of images using a pretrained attentive embedding network. The pretrained attentive embedding network includes a first Convolutional Neural Network (CNN), a fully connected layer and a plurality of spatial attention modules. The plurality of vector embeddings are computed by the pretrained attentive embedding network as follows. Initially, a plurality of local contextual feature vectors are computed based on the plurality of images by the first CNN. Further, a plurality of attention vectors are computed based on the corresponding plurality of local contextual feature vectors and a current global vector using a corresponding spatial attention module among the plurality of spatial attention modules. Further, a plurality of elementwise dot products comprising an elementwise dot product is computed between the plurality of local contextual feature vectors and each of a corresponding plurality of attention vectors. Further, a new global vector is generated by concatenating the plurality of elementwise dot products. Finally, the plurality of vector embeddings are computed based on the new global vector using the fully connected layer of the attentive embedding network.

In an embodiment, each of the plurality of spatial attention modules includes an addition unit, a convolution unit and a sigmoid activation function. The global vector is obtained from the final layer of the first CNN. The spatial attention module is illustrated in FIG. 3C.

In an embodiment, the method of training the attentive embedding network is explained below: In an embodiment, the dataset $D$ is divided into subset of datasets $D_1, D_2, .... D_k$ where, each subset of datasets $\{D\}$ has a support set $D_U$ and a query set $D_Q$. The support set $D_U$ includes a different category of tasks $\left\{T_U^i, T_U^j\right\}$ and the query set $D_Q$ includes a set of tasks $\left\{T_Q^j,\right\}$ belonging to one of the categories from the support set. Each task has $M$ number of demonstrations.

A first plurality of vector embeddings corresponding to each of the plurality of tasks associated with the support dataset are computed using the attentive embedding network $f_\theta$: $R^D \rightarrow R^N$ which estimates an N-dimensional embedding vector $\varepsilon_k^j \in R^N$ for a given demonstration $T_k$ where $T_k \in T^j$. The normalized mean embeddings $\varepsilon^j \in R^N$ is calculated using all M demonstrations of the task $T^j$. The first plurality of vector embeddings associated with the support dataset are normalized using a normalization technique. The normalized mean embeddings $\varepsilon^j \in R^N$ is calculated using all M demonstrations of the task $T^j$ as shown in equation (1).

$$\varepsilon^j = \left[\frac{1}{M}\sum_{T_k^j=T^j} f_\theta(T_k^j)\right]^\wedge \dots\dots\dots\dots\dots\dots\dots\dots\dots\dots\dots\dots(1)$$

where $U^\wedge = \frac{v}{\|v\|}$ . Further, a second plurality of vector embeddings corresponding to each of the plurality of tasks associated with the query dataset are computed using the attentive embedding network. Further, the dot product similarity is computed between the first plurality of normalized vector embeddings and the second plurality of vector embeddings. Further, the attentive embedding network is trained based on the computed dot product similarity. The training is continued until the dot product similarity between the first plurality of normalized vector embeddings and the second plurality of vector embeddings are greater than a predefined similarity threshold.

The embedding loss $L_{emb}$ used to train the attentive embedding network is given in equation 2.

$$L_{emb} = \sum_{T_k^j=T^j}\sum_{T^i=T^j} \max[0, margin - \varepsilon_{k,Q}^j \cdot \varepsilon_U^j + \varepsilon_{k,Q}^j \cdot \varepsilon_U^j] \dots\dots\dots\dots\dots\dots(2)$$

where $\varepsilon_{k,Q}^j$ is an embedding vector for $k^{th}$ demonstration of the task $\{T_Q^j\}$ for the query set and $\varepsilon_U^j, \varepsilon_U^j$ are the normalized embeddings for the task $\{T_U^i, T_U^j\}$ taken from the support set. The model is trained to produce a higher dot-product similarity between a task's demonstration $\varepsilon_{K,Q}^j$ and its average embeddings $\varepsilon_U^j$ than to from other tasks $\varepsilon_U^j$. each of the sampled tasks chosen at the time of training are unique. All the other tasks in the support set are considered to be negative $T_i$. Therefore, each task within a support set, is compared to every other task. The value of margin in $L_{emb}$ is varied from 0.1 to 1.

In a claimed embodiment, the spatial attention module of the attentive embedding network is incorporated to make the embeddings more robust by extracting features from multiple layers of the attentive-embedding network. The local feature vector $L_s$ is defined as $L_s = \{l_1^s, l_2^s, \dots.. l_n^s\}$, where $l_i^s$ are the local contextual features extracted from the convolution layer at the $i^{th}$ spatial location. Let $g$ be the global feature vector which is the output of the final convolutional layer. In order to integrate attention in the global feature vector $g$, the compatibility score is given inequation (3).

$$C(\widehat{L^s}, g) = \{l_1^s, l_2^s, \dots.. l_n^s\} \dots\dots\dots\dots\dots\dots\dots\dots(3)$$

where, $(\widehat{L^s})$ is a set of vectors after it is linearly mapped to the dimensionality of $g$. The compatibility function used here is calculated between $L_s$ and $g$ as given in equation (4).

$$c_i^s = <u, l_i^s + g>, i \in \{1 \dots n\} \dots\dots\dots\dots\dots(4)$$

where $u$ is the weight vector learned by 1X1 convolutional layer that takes the sum of components as input and gives the compatibility scores as output. The compatibility scores are further passed through the sigmoid activation function to get normalized compatibility scores $A_s = \{A_1^s, A_2^s, \dots.. A_n^s\}$. In an embodiment, the normalized compatibility score can be alternatively represented as attention vector. These normalized compatibility scores are then used to compute the vector $g_a^s$ for each layer s by using elementwise dot product $\left(g_a^s = \sum_{i=1}^{n} a_i^s \cdot l_i^s\right)$. These vectors are then concatenated. The concatenated feature vector replaces the original vector $g$ to get the attention integrated global vector $g_a = \{g_a^1, g_a^2, \ldots \ldots g_a^n\}$. This vector $g_a$ is further passed through the fully connected layers to get the embedding vector $\varepsilon$.

At step 206 of the method 200, the one or more hardware processors 102 are configured by the programmed instructions to compute a control action based on the plurality of vector embeddings, a robot joint state vector, a robot joint velocity vector and the image from the plurality of images, using a control network. In an embodiment, the control action is a robotic torque. The control network includes a second CNN and a plurality of fully connected layers. The control network is connected to the attentive embedding using multiplicative spatial skip connections. For example, the robot joint state vector and the robot joint velocity vector are Nx1 vectors. For example, N can be 20.

In a claimed embodiment, the method of computing the plurality of control actions based on the plurality of vector embeddings, the image selected at random from the plurality of images, the robot joint state vector and the robot joint velocity vector using the pretrained control network is explained as follows: Initially, the plurality of vector embeddings, the image from plurality of images, the robot joint state vector and the robot joint velocity vector are received as input by the control network. Further, tiling of the plurality of vector embeddings are performed corresponding to a size associated with the image. The image is selected randomly from the plurality of images. After tiling, a concatenated data is obtained by concatenating the plurality of tiled vector embeddings and the image. After concatenation, a plurality of element-wise feature maps are computed based on the concatenated data using the second CNN. Further, a plurality of fusion feature maps are computed by multiplying each of the plurality of element-wise feature maps with a corresponding feature maps of the attentive embedding network. After computing fusion maps, a flattened feature map is computed based on the plurality of fusion feature maps using the second CNN. Further, a composite feature vector is generated by concatenating the flattened feature map, the robot joint state vector and the robot joint velocity vector. Finally, the control action are computed based on the composite feature vector by using the plurality of fully connected layers of the control network.

In an embodiment, the method of training the control network is explained as follows: The plurality of vector embeddings, the image from the query dataset, the robot joint state vector and the robot joint velocity vector are received as input. Further, tiling is performed on the plurality of vector embeddings corresponding to the size associated with the image. The image is randomly selected from the query dataset. After tiling, the concatenated data is obtained by concatenating the plurality of tiled vector embeddings and the image. Further, the plurality of feature maps are computed based on the concatenated data using the second CNN. After computing feature maps, the plurality of fusion feature maps are computed by multiplying each of the plurality of element-wise feature maps with the corresponding feature maps of the attentive embedding network. Further, a flattened feature map is computed based on the plurality of fusion feature maps using the second CNN. The composite feature vector is generated by concatenating the flattened feature map, the robot joint state vector and the robot joint velocity vector. Further, a first control action is computed based on the composite feature vector by using Fully connected layers. Similarly, a second control action is computed based on the composite feature vector by using Fully connected layers. Further, a total behavioral cloning loss function is computed based on the first control action and the second control action. Finally, the control network is trained based on the total behavioral cloning loss function. In an embodiment, the first control action and the second control actions are robotic torques.

In an embodiment, the control loss $L_{ctr}$ of the control network is defined as given in equations (5) through (7).

$$L_{ctr} = L_{ctr}^{U} + L_{ctr}^{Q} \quad \ldots\ldots\ldots\ldots\ldots\ldots\ldots\ldots (5)$$

$$L_{ctr}^{Q} = \sum_{T \in T_Q^i} \sum_{(o,a) \in T} \left\| \pi\left(o, \varepsilon_U^j\right) - a \right\|_2^2 \ldots\ldots\ldots\ldots\ldots\ldots\ldots\ldots (6)$$

$$L_{ctr}^{U} = \sum_{T \in T_U^i} \sum_{(o,a) \in T} \left\| \pi\left(o, \varepsilon_U^j\right) - a \right\|_2^2 \ldots\ldots\ldots\ldots\ldots\ldots\ldots\ldots (7)$$

Let $L_{ctr}^{Q}$ and $L_{ctr}^{U}$ are the control loss for the demonstration from query and support set respectively. The control loss $L_{ctr}$ also helps to learn the embeddings. Total loss $L_{Total}$ which is used to train the attentive-embedding network and control network is jointly defined as given in equation (8):

$$L_{Total} = \sum_{\tau} \lambda_{emb} L_{emb} + \lambda_{ctr}^{U} L_{ctr}^{U} + \lambda_{ctr}^{Q} L_{ctr}^{Q} \quad \ldots\ldots\ldots\ldots\ldots\ldots\ldots\ldots (8)$$

where, $\lambda_{emb}$, $\lambda_{ctr}^{Q}$ and $\lambda_{ctr}^{U}$ are the hyperparameters. The input to the attentive embedding network is of dimension, (*width, height, 3 \* |T|*). where 3 is for RGB channels. Given a demonstration *T* we consider only the first and last frame for computing the embeddings. Therefore, input dimension to the attentive-embedding network is (*width, height,* 6). The embeddings are then tiled and concatenated with the current observation resulting into an input image for the control network of size (*width, height,* 3 + *N*), where *N* is the size of embedding vector.

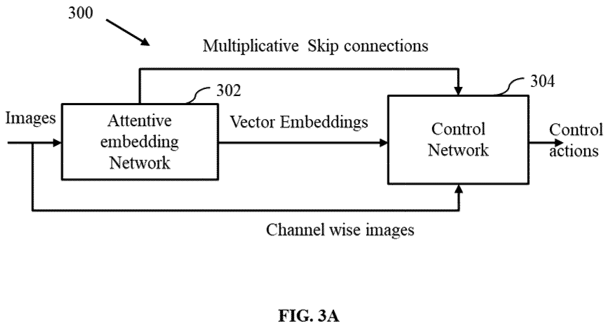

FIG. 3A is an example overall architecture for the processor implemented method for attentive one shot meta imitation learning from visual demonstration implemented by the system of FIG. 1, in accordance with some embodiments of the present disclosure. Now referring to FIG. 3A, the overall architecture includes an attentive embedding network 302 and a control network 304. The attentive embedding network 302 receives the plurality of images and computes the plurality of vector embeddings. The plurality of vector embeddings and the channel wise single image from the plurality of images are provided as input to the control network 304 which in turn computes the control action for the robot. The attentive embedding network 302 and the control network 304 are connected by a plurality of spatial skip connections.

The attentive embedding network 302 is further explained with FIG. 3B. FIG. 3B is an example architecture for attentive embedding network for the processor implemented method for attentive one shot meta imitation learning from visual demonstration implemented by the system of FIG. 1, in accordance with some embodiments of the present disclosure. Now referring to FIG. 3B, the attentive embedding network 302 includes a plurality of convolutional filters 306A to 306D, a plurality of feature maps 308A to 308D, a global average pooling 310, a plurality of spatial attention modules 314A to 314C, a concatenation module 316 and a fully connected layer 318. The connection lines A, B, C and D are the spatial skip connections to the control network 304. A plurality of local contextual feature vectors are computed by the first CNN comprising the plurality of convolutional filters 306A to 306D and the plurality of feature maps 308A to 308D based on the plurality of input images. Further, the plurality of attention vectors are computed based on the plurality of local contextual feature vectors and the current global feature vector using the corresponding plurality of spatial attention modules 314A to 314C. Further, an elementwise dot product between each of the plurality of attention vectors and each of the corresponding plurality of local contextual feature vector are computed by the multiplies associated with the attentive embedding network. Further, the new global vector is computed by concatenating the plurality of elementwise dot products by the concatenation module 316. Finally, the plurality of vector embeddings are computed based on the new global vector using the fully connected layer 318 of the attentive embedding network.

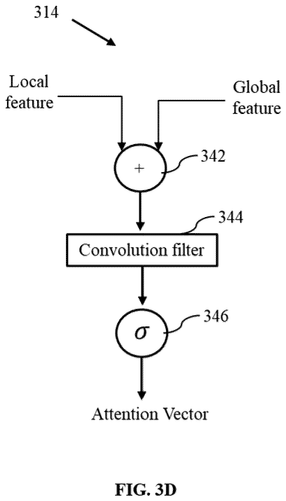

FIG. 3C is an example architecture for control network for the processor implemented method for attentive one shot meta imitation learning from visual demonstration implemented by the system of FIG. 1, in accordance with some embodiments of the present disclosure. Now referring to FIG. 3D, the control network 304 includes the second CNN, a plurality of joint states 336 and a fully connected layer 338. The second CNN includes a plurality of convolution filters 330A to 330D, a plurality of feature maps 312A to 312D, a flattened layer 334. Initially, the plurality of vector embeddings, the image from the plurality of images, the robot joint state vector 336 and the robot joint velocity vector 340 are received by the control network 304. Further, tiling is performed on the plurality of vector embeddings corresponding to the size of the image by the second CNN. Further, a concatenated data is obtained by concatenating the plurality of tiled vector embeddings and the corresponding channel-wise single image by the second CNN. Further, a plurality of element-wise feature maps based on the concatenated data is computed using the second CNN. Further, a plurality of fusion feature maps computed by multiplying each of the plurality of element-wise feature maps with a corresponding feature maps of the attentive embedding network. Further, a flattened feature map is computed based on the plurality of fusion feature maps using the second CNN. A composite feature vector is obtained by concatenating the flattened feature map, the robot joint state vector and the plurality of robot joint state velocity vector. Finally, the control action based on the composite feature vector is computed by using the plurality of fully connected layers 338 of the control network. 304.

The spatial attention modules are explained further with reference to FIG. 3D. An example architecture for attention module for the processor implemented method for attentive one shot meta imitation learning from visual demonstration implemented by the system of FIG. 1 is depicted in FIG. 3D, in accordance with some embodiments of the present disclosure. Now referring to FIG. 3D, the spatial attention module 314 includes an adder 342, a convolution filter 344 and a sigmoid function 346. The local feature and the global feature are given as input to the adder 322 which computes a sum of the local and the global feature. the computed sum is given as input to the convolution filter 324 which computes a compatibility score. The compatibility score is given as input to the sigmoid activation function 326 which computes a normalized compatibility score.

In an embodiment, the present disclosure is experimented as follows: The proposed framework is implemented in TensorFlow on a GTX (Giga Texel Shader eXtreme) 1080 GPU (Graphics Processing Unit) machine. An augmentation of the data including changes in brightness, saturation and contrast in a range of [0.5, 2.0], [0.6, 1.6] and [0.7, 1.3] respectively is carried out to preclude over-fitting. Other hyperparameters such as learning rate, batch size, lambda weights $\lambda_{(emb,ctr)}$ in the total loss function all are appropriately tuned while training the model. The present disclosure is evaluated using the simulated Pushing and simulated reaching. Further, the present disclosure is tested on a custom dataset created using our new pushing environment created in Pybullet based simulator. The performance of the present disclosure is increased by more than 60% when compared with the conventional methods.

The training set includes 1650 tasks and the test set has 15 tasks which are never given to the network during training. Input to the attentive embedding network is a 80x64 RGB images and the input to the control network is embeddings, joint angles, end effector position and the RGB Image. During testing, the task is considered a success if the end-effector comes within 0.05 meters of the goal within the last 10 timesteps. Quantitative results and comparison with state-of-the-art techniques and the present disclosure outperforms the conventional methods.

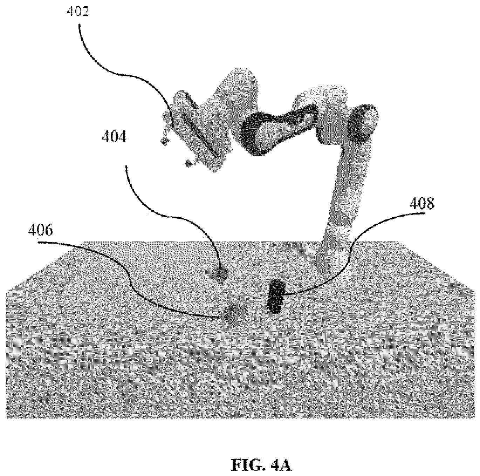

In an embodiment, the simulated pushing is explained further as follows: The aim of the simulated pushing task is to place the target object at a specific location by pushing in the presence of a distractor. The manipulator is allowed to operate in the 3D environment with an action space formed by the 7-DoF torque control vector. The observation space includes RGB images of resolution of 125x125 captured using an external camera as shown in FIG. 4A. Now referring to an example demonstration shown in FIG. 4A where the aim is to place a source object 404 at a target location 406. Here. 402 is a robotic arm and 408 is the distractor. The dataset is divided into 769 tasks for training and 74 testing. The tasks are defined as having different set of objects or context for a pushing skill, for example one task is pushing a toy chair to the target location and second task is pushing a toy elephant. Both of these tasks are having similar skill but different sets of objects. Given a demonstration from the task during training, the RGB-images are fed to the attentive-embedding network to convert them into task embeddings. These are further combined with their input-images along with joint angles (robot joint state vector) and velocities (robot joint velocity vector) from the demonstration as an input to the control network to estimate the control action like robot torque. At the time of testing, the task is considered a success if the robot pushes the target object 404 into the target location 406 for at least 10 timesteps within 100-timestep episode. The estimated attention maps are mainly concentrating on the task related pixels such as the target object, manipulator's body and end-effector and successfully able to discard the noisy information in the task embeddings. This quantitative effect shows that the method disclosed herein is able to out-perform the state-of-the art methods.

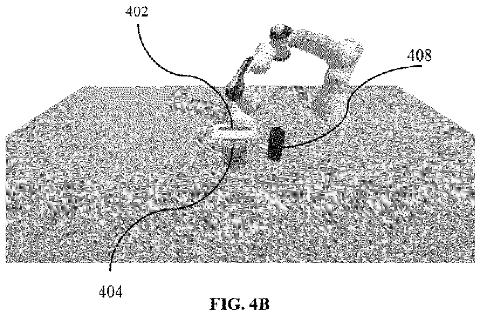

Now referring to FIG. 4B, it is observed the robotic arm is able to pick the source object 404 in the target location without picking the distractor 408. This robotic control action for picking and placing the objects is provided by the system 100.

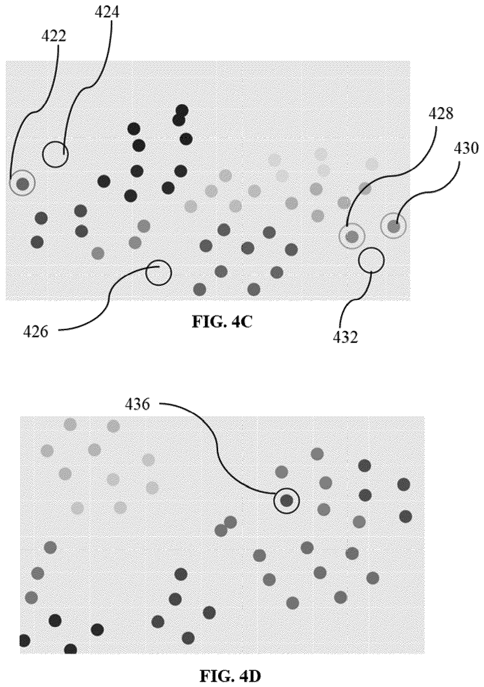

In an embodiment, the efficiency of the attentive embedding network is evaluated by visualizing the embeddings estimated for different demonstrations of a task using t-SNE (t-distributed Stochastic Neighbor Embedding). Five demonstrations were plotted from each of the 10 randomly sampled pushing tasks in the test set and the results are depicted in FIG. 4C and FIG.4D. Now referring to FIG.4C, the plot illustrates the embedding clusters of the conventional method. Here, there are numerous outliers, and the outliers are marked in circles 422 through 432. FIG. 4D illustrates the embeddings clusters of the present disclosure and it is observed that there is only one outlier 436 in comparison to the clusters of the conventional methods for same set of tasks.

In an embodiment, rigorous ablation studies were performed to validate the proficiency of the proposed framework. Regarding the ablation studies, the present disclosure utilizes multiplicative skip connections coming from the attentive embedding network with the control network as shown in FIG. 3A, 3B and 3C to better propagate the gradients from the control network to the attentive embedding network. The ablation studies were performed with other skip connection methods such as addition, concatenation or non-linear fusion with 1x1 convolutions. It is observed that the multiplicative feature fusion is working better than other methods. Further, it is observed that using spatial attention module and skip connections not only improves the embedding accuracy and success rate, but it also prevents overfitting of the network. In an embodiment, the embedding loss for the conventional method increases making embedding network overfit whereas the present disclosure does not increase the embedding loss which prevent overfitting. It is also observed that using skip connections prevent overfitting of the control network as query loss and support loss are not increasing as we train the network.

The written description describes the subject matter herein to enable any person skilled in the art to make and use the embodiments. The scope of the subject matter embodiments is defined by the claims.

The embodiments of present disclosure herein address the unresolved problem of computing a control action for robotic arms using machine learning. The present disclosure utilizes spatial skip connections between the attentive embedding network and the control network which increases the accuracy of the present disclosure. Further, the attentive module of the attentive embedding network increases the performance of the present disclosure. Further, the present disclosure is performing better when tested using custom dataset including demonstrations with ambiguous background.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of the invention being indicated by the following claims.

## Claims

1. A processor implemented method (200) for attentive one shot meta imitation learning from a visual demonstration, comprising:

   receiving (202), by one or more hardware processors (102), a plurality of images pertaining to the visual demonstration of a robot performing a task, wherein the plurality of images is sequential, wherein a new task is learned from the visual demonstration by attentive one shot meta imitation learning;
   computing (204), by the one or more hardware processors (102), a plurality of vector embeddings based on the plurality of images using a pretrained attentive embedding network, wherein

   the pretrained attentive embedding network is pretrained for a set tasks,
   the set of tasks do not include a new task,
   the pretrained attentive embedding network comprises:

   a first Convolutional Neural Network, CNN,

   a fully connected layer(318), and
   a plurality of spatial attention modules (314A-314C), and
   the first CNN is an inner most layer,
   the fully connected layer (318) is an outermost layer,
   the plurality of spatial attention modules (314A-314C) is between the first CNN and the fully connected layer (318), and
   the computation of the plurality of vector embeddings further comprises:

   computing a plurality of local contextual feature vectors based on the plurality of images by the first CNN;

computing a plurality of attention vectors based on the plurality of local contextual feature vectors and a current global feature vector using a corresponding spatial attention module among the plurality of spatial attention modules;

computing a plurality of elementwise dot products comprising an elementwise dot product between each of the plurality of attention vectors and each of a corresponding plurality of local contextual feature vectors;

generating a new global vector by concatenating the plurality of elementwise dot products; and computing the plurality of vector embeddings based on the new global vector using the fully connected layer of the attentive embedding network; and

computing (206), by the one or more hardware processors (102), a control action based on the plurality of vector embeddings, an image selected at random from the plurality of images, a robot joint state vector, and a robot j oint velocity vector using a pretrained control network, wherein computing the control action is based on the plurality of vector embeddings, the selected image, the robot joint state vector, and the robot joint velocity vector using the pretrained control network, comprises:

receiving the plurality of vector embeddings, the selected image, the robot joint state vector, and the robot joint velocity vector as input by the pretrained control network;

tiling of the plurality of vector embeddings corresponding to a size associated with the selected image;

obtaining, subsequent to the tiling, concatenated data by concatenating the plurality of tiled vector embeddings and the selected image;

computing, subsequent to the concatenation, a plurality of element-wise feature maps based on the concatenated data using a second CNN;

computing a plurality of fusion feature maps by multiplying each of the plurality of element-wise feature maps with corresponding feature maps of the attentive embedding network;

computing, after the computation of the fusion feature maps, a flattened feature map based on the plurality of fusion feature maps using the second CNN;

generating a composite feature vector by concatenating the flattened feature map, the robot joint state vector, and the robot joint velocity vector; and

computing, the control action based on the composite feature vector by using a plurality of fully connected layers of the pretrained control network, and wherein the pretrained control network comprises the second CNN and the plurality of fully connected layers, and wherein the pretrained control network is connected to the attentive embedding using multiplicative spatial skip connections.

2. The processor implemented method of claim 1, wherein each of the plurality of spatial attention modules comprises an addition unit, a convolution unit and a sigmoid activation function, wherein the new global vector is obtained from a final layer of the first CNN.

3. The processor implemented method of claim 1, wherein the pretrained attentive embedding network and the control network are tested with a custom dataset further comprising a complex background.

4. The processor implemented method of claim 1, wherein the method comprises:

receiving a support dataset and a query dataset, wherein the support dataset comprises the plurality of sequential images corresponding a plurality of tasks, and wherein the query dataset comprises the plurality of sequential images pertaining to a specific task;

computing a first plurality of vector embeddings corresponding to each of the plurality of tasks associated with the support dataset using the attentive embedding network;

normalizing the first plurality of vector embeddings associated with the support dataset using a normalization technique;

computing a second plurality of vector embeddings corresponding to each of the plurality of tasks associated with the query dataset using the attentive embedding network;

computing the dot product similarity between the normalized first plurality of vector embeddings and the second plurality of vector embeddings; and

training the attentive embedding network based on the computed dot product similarity, wherein the training is continued until the dot product similarity between the first plurality of normalized vector embeddings and the second plurality of vector embeddings are greater than a predefined similarity threshold.

5. The processor implemented method of claim 1, wherein the method comprises:

receiving the plurality of vector embeddings, an image from a query dataset, the plurality of robot joint state vector, and the plurality of robot joint velocity vector;

tiling the plurality of vector embeddings corresponding to a size associated with the image, wherein the image is randomly selected from the query dataset;

obtaining the concatenated data by concatenating the plurality of tiled vector embeddings and the image;

computing a plurality of element-wise feature maps based on the concatenated data using the second CNN;

computing a plurality of fusion feature maps by multiplying each of the plurality of element-wise feature maps with the corresponding feature maps of the attentive embedding network;

computing a flattened feature map based on the plurality of fusion feature maps using the second CNN;

generating a composite feature vector by concatenating the flattened feature map, the plurality of robot joint states and the plurality of robot joint velocities;

computing a first control action based on the composite feature vector by using Fully connected layers;

computing a second control action based on the composite feature vector by using Fully connected layers;

computing a total behavioral cloning loss function based on the first control action and the second control action; and

training the control network based on the total behavioral cloning loss function.

6. A system (100) for attentive one shot meta imitation learning from a visual demonstration, comprising:

at least one memory (104) storing programmed instructions;

one or more Input /Output (I/O) interfaces (112); and

one or more hardware processors (102) operatively coupled to the at least one memory (104), wherein the one or more hardware processors (102) are configured by the programmed instructions to:

receive a plurality of images pertaining to the visual demonstration of a robot performing a task, wherein the plurality of images is sequential and a new task is learned from the visual demonstration by attentive one shot meta imitation learning;

compute a plurality of vector embeddings based on the plurality of images using a pretrained attentive embedding network, wherein

the pretrained attentive embedding network is pretrained for a set tasks,

the set of tasks do not include a new task,

the pretrained attentive embedding network comprises: a first Convolutional Neural Network, CNN, a fully connected layer and a plurality of spatial attention modules, and

the first CNN is an inner most layer,

the fully connected layer is an outermost layer,

the plurality of spatial attention modules is between the first CNN and the fully connected later, and

the computation of the plurality of vector embeddings further comprises:

computing a plurality of local contextual feature vectors based on the plurality of images by the first CNN;

computing a plurality of attention vectors based on the plurality of local contextual feature vectors and a current global feature vector using a corresponding spatial attention module among the plurality of spatial attention modules;

computing a plurality of elementwise dot products comprising an elementwise dot product between each of the plurality of attention vectors and each of a corresponding plurality of local contextual feature vectors;

generating a new global vector by concatenating the plurality of element wise dot products; and

computing the plurality of vector embeddings based on the new global vector using the fully connected layer of the attentive embedding network; and

compute, a control action based on the plurality of vector embeddings, an image selected at random from the plurality of images, a robot joint state vector and a robot joint velocity vector using a pretrained control network, wherein computing the control action is based on the plurality of vector embeddings, the selected image, the robot joint state vector, and the robot joint velocity vector using the pretrained control network, comprises:

receiving the plurality of vector embeddings, the selected image, the robot joint state vector, and the robot joint velocity vector as input by the pretrained control network;

tiling of the plurality of vector embeddings corresponding to a size associated with the selected image;

obtaining, subsequent to the tiling, concatenated data by concatenating the plurality of tiled vector embeddings and the selected image;

computing, subsequent to the concatenation, a plurality of element-wise feature maps based on the concatenated data using a second CNN;

computing a plurality of fusion feature maps by multiplying each of the plurality of element-wise feature maps with corresponding feature maps of the attentive embedding network;

computing, after the computation of the fusion feature maps, a flattened feature map based on the plurality of fusion feature maps using the second CNN;

generating a composite feature vector by concatenating the flattened feature map, the robot joint state vector, and the robot joint velocity vector; and

computing, the control action based on the composite feature vector by using a plurality of fully connected layers of the pretrained control network, and wherein the pretrained control network comprises the second CNN and the plurality of fully connected layers, and wherein the pretrained control network is connected to the attentive embedding using multiplicative spatial skip connections.

7. The system of claim 6, wherein each of the plurality of spatial attention modules comprises an addition unit, a convolution unit and a sigmoid activation function, wherein the new global vector is obtained from a final layer of the first CNN.

8. The system of claim 6, wherein the pretrained attentive embedding network and the pretrained control network are tested with a custom dataset comprising complex background.

9. The system of claim 6, wherein the one or more hardware processors (102) are configured by the programmed instructions for:

receiving a support dataset and a query dataset, wherein the support dataset comprises the plurality of sequential images corresponding a plurality of tasks, and wherein the query dataset comprises the plurality of sequential images pertaining to a specific task;

computing a first plurality of vector embeddings corresponding to each of the plurality of tasks associated with the support dataset using the attentive embedding network;

normalizing the first plurality of vector embeddings associated with the support dataset using a normalization technique;

computing a second plurality of vector embeddings corresponding to each of the plurality of tasks associated with the query dataset using the attentive embedding network;

computing the dot product similarity between the normalized first plurality of vector embeddings and the second plurality of vector embeddings; and

training the attentive embedding network based on the computed dot product similarity, wherein the training is continued until the dot product similarity between the first plurality of normalized vector embeddings and the second plurality of vector embeddings are greater than a predefined similarity threshold.

10. The system of claim 6, wherein the one or more hardware processors (102) are configured by the programmed instructions for:

receiving the plurality of vector embeddings, an image from a query dataset, the plurality of robot joint state vector and the plurality of robot joint velocity vector;

tiling the plurality of vector embeddings corresponding to a size associated with the image, wherein the image is randomly selected from the query dataset;

obtaining the concatenated data by concatenating the plurality of tiled vector embeddings and the image;

computing a plurality of element-wise feature maps based on the concatenated data using the second CNN;

computing a plurality of fusion feature maps by multiplying each of the plurality of element-wise feature maps with the corresponding feature maps of the attentive embedding network;

computing a flattened feature map based on the plurality of fusion feature maps using the second CNN;

generating a composite feature vector by concatenating the flattened feature map, the plurality of robot joint states and the plurality of robot joint velocities;

computing a first control action based on the composite feature vector by using Fully connected layers;

computing a second control action based on the composite feature vector by using Fully connected layers;
computing a total behavioral cloning loss function based on the first control action and the second control action; and
training the control network based on the total behavioral cloning loss function.

**11.** One or more non-transitory machine-readable information storage mediums comprising one or more instructions which when executed by one or more hardware processors, cause the one or more hardware processors to perform the method of claim 1.

**12.** The one or more non-transitory machine-readable information storage mediums of claim 11, wherein each of the plurality of spatial attention modules comprises an addition unit, a convolution unit and a sigmoid activation function, wherein the new global vector is obtained from a final layer of the first CNN.

**13.** The one or more non-transitory machine-readable information storage mediums of claim 11, wherein the pretrained attentive embedding network and the pretrained control network are tested with a custom dataset comprising complex background.

**Patentansprüche**

**1.** Prozessorimplementiertes Verfahren (200) zum aufmerksamen One-Shot-Metaimitationslernen aus einer visuellen Demonstration, umfassend:

Empfangen (202), durch einen oder mehrere Hardwareprozessoren (102), einer Mehrzahl von Bildern, die sich auf die visuelle Demonstration eines Roboters beziehen, der eine Aufgabe ausführt, wobei die Mehrzahl von Bildern sequenziell ist, wobei eine neue Aufgabe aus der visuellen Demonstration durch aufmerksames One-Shot-Metaimitationslernen gelernt wird;
Berechnen (204), durch den einen oder die mehreren Hardwareprozessoren (102), einer Mehrzahl von Vektoreinbettungen basierend auf der Mehrzahl von Bildern unter Verwendung eines vortrainierten aufmerksamen Einbettungsnetzwerks, wobei

das vortrainierte aufmerksame Einbettungsnetzwerk für eine Menge von Aufgaben vortrainiert ist,
die Menge von Aufgaben keine neue Aufgabe beinhaltet,
das vortrainierte aufmerksame Einbettungsnetzwerk umfasst:

ein erstes Convolutional Neural Network, CNN,

eine vollständig verbundene Schicht (318), und
eine Mehrzahl von räumlichen Aufmerksamkeitsmodulen (314A-314C), und
das erste CNN eine innerste Schicht ist,
die vollständig verbundene Schicht (318) eine äußerste Schicht ist,
die Mehrzahl von räumlichen Aufmerksamkeitsmodulen (314A-314C) zwischen dem ersten CNN und der vollständig verbundenen Schicht (318) ist, und
die Berechnung der Mehrzahl von Vektoreinbettungen ferner umfasst:

Berechnen einer Mehrzahl von lokalen Kontextmerkmalsvektoren basierend auf der Mehrzahl von Bildern durch das erste CNN;
Berechnen einer Mehrzahl von Aufmerksamkeitsvektoren basierend auf der Mehrzahl von lokalen Kontextmerkmalsvektoren und einem aktuellen globalen Merkmalsvektor unter Verwendung eines entsprechenden räumlichen Aufmerksamkeitsmoduls unter der Mehrzahl von räumlichen Aufmerksamkeitsmodulen;
Berechnen einer Mehrzahl von elementweisen Punktprodukten, die ein elementweises Punktprodukt zwischen jedem der Mehrzahl von Aufmerksamkeitsvektoren und jedem einer entsprechenden Mehrzahl von lokalen Kontextmerkmalsvektoren umfassen;
Erzeugen eines neuen globalen Vektors durch Verketten der Mehrzahl von elementweisen Punktprodukten; und
Berechnen der Mehrzahl von Vektoreinbettungen basierend auf dem neuen globalen Vektor unter Verwendung der vollständig verbundenen Schicht des aufmerksamen Einbettungsnetzwerks; und

Berechnen (206), durch den einen oder die mehreren Hardwareprozessoren (102), einer Steueraktion basierend auf der Mehrzahl von Vektoreinbettungen, einem Bild, das zufällig aus der Mehrzahl von Bildern ausgewählt wird, einem Robotergelenkzustandsvektor und einem Robotergelenkgeschwindigkeitsvektor unter Verwendung eines vortrainierten Steuernetzwerks, wobei das Berechnen der Steueraktion basierend auf der Mehrzahl von Vektoreinbettungen, dem ausgewählten Bild, dem Robotergelenkzustandsvektor und dem Robotergelenkgeschwindigkeitsvektor unter Verwendung des vortrainierten Steuernetzwerks umfasst:

Empfangen der Mehrzahl von Vektoreinbettungen, des ausgewählten Bildes, des Robotergelenkzustandsvektors und des Robotergelenkgeschwindigkeitsvektors als Eingabe durch das vortrainierte Steuernetzwerk;
Kacheln der Mehrzahl von Vektoreinbettungen entsprechend einer Größe, die dem ausgewählten Bild zugeordnet ist;
Erhalten, im Anschluss an das Kacheln, von verketteten Daten durch Verketten der Mehrzahl von gekachelten Vektoreinbettungen und des ausgewählten Bildes;
Berechnen, im Anschluss an die Verkettung, einer Mehrzahl von elementweisen Merkmalskarten basierend auf den verketteten Daten unter Verwendung eines zweiten CNN;
Berechnen einer Mehrzahl von Fusionsmerkmalskarten durch Multiplizieren jeder der Mehrzahl von elementweisen Merkmalskarten mit entsprechenden Merkmalskarten des aufmerksamen Einbettungsnetzwerks;
Berechnen, nach der Berechnung der Fusionsmerkmalskarten, einer abgeflachten Merkmalskarte basierend auf der Mehrzahl von Fusionsmerkmalskarten unter Verwendung des zweiten CNN;
Erzeugen eines zusammengesetzten Merkmalsvektors durch Verketten der abgeflachten Merkmalskarte, des Robotergelenkzustandsvektors und des Robotergelenkgeschwindigkeitsvektors; und
Berechnen der Steueraktion basierend auf dem zusammengesetzten Merkmalsvektor unter Verwendung einer Mehrzahl von vollständig verbundenen Schichten des vortrainierten Steuernetzwerks, und wobei das vortrainierte Steuernetzwerk das zweite CNN und die Mehrzahl von vollständig verbundenen Schichten umfasst, und wobei das vortrainierte Steuernetzwerk mit der aufmerksamen Einbettung unter Verwendung von multiplikativen räumlichen Sprungverbindungen verbunden ist.

2. Prozessorimplementiertes Verfahren nach Anspruch 1, wobei jedes der Mehrzahl von räumlichen Aufmerksamkeitsmodulen eine Additionseinheit, eine Faltungseinheit und eine Sigmoid-Aktivierungsfunktion umfasst, wobei der neue globale Vektor von einer letzten Schicht des ersten CNN erhalten wird.

3. Prozessorimplementiertes Verfahren nach Anspruch 1, wobei das vortrainierte aufmerksame Einbettungsnetzwerk und das Steuernetzwerk mit einem benutzerdefinierten Datensatz getestet werden, der ferner einen komplexen Hintergrund umfasst.

4. Prozessorimplementiertes Verfahren nach Anspruch 1, wobei das Verfahren umfasst:

Empfangen eines Unterstützungsdatensatzes und eines Abfragedatensatzes, wobei der Unterstützungsdatensatz die Mehrzahl von sequenziellen Bildern umfasst, die einer Mehrzahl von Aufgaben entsprechen, und wobei der Abfragedatensatz die Mehrzahl von sequenziellen Bildern umfasst, die sich auf eine spezifische Aufgabe beziehen;
Berechnen einer ersten Mehrzahl von Vektoreinbettungen, die jeder der Mehrzahl von Aufgaben entsprechen, die dem Unterstützungsdatensatz zugeordnet sind, unter Verwendung des aufmerksamen Einbettungsnetzwerks;
Normalisieren der ersten Mehrzahl von Vektoreinbettungen, die dem Unterstützungsdatensatz zugeordnet sind, unter Verwendung einer Normalisierungstechnik;
Berechnen einer zweiten Mehrzahl von Vektoreinbettungen, die jeder der Mehrzahl von Aufgaben entsprechen, die dem Abfragedatensatz zugeordnet sind, unter Verwendung des aufmerksamen Einbettungsnetzwerks;
Berechnen der Punktproduktähnlichkeit zwischen der normalisierten ersten Mehrzahl von Vektoreinbettungen und der zweiten Mehrzahl von Vektoreinbettungen; und
Trainieren des aufmerksamen Einbettungsnetzwerks basierend auf der berechneten Punktproduktähnlichkeit, wobei das Training fortgesetzt wird, bis die Punktproduktähnlichkeit zwischen der ersten Mehrzahl von normalisierten Vektoreinbettungen und der zweiten Mehrzahl von Vektoreinbettungen größer als ein vordefinierter Ähnlichkeitsschwellenwert ist.

**5.** Prozessorimplementiertes Verfahren nach Anspruch 1, wobei das Verfahren umfasst:

Empfangen der Mehrzahl von Vektoreinbettungen, eines Bildes aus einem Abfragedatensatz, der Mehrzahl von Robotergelenkzustandsvektoren und der Mehrzahl von Robotergelenkgeschwindigkeitsvektoren;

Kacheln der Mehrzahl von Vektoreinbettungen entsprechend einer Größe, die dem Bild zugeordnet ist, wobei das Bild zufällig aus dem Abfragedatensatz ausgewählt wird;

Erhalten der verketteten Daten durch Verketten der Mehrzahl von gekachelten Vektoreinbettungen und des Bildes;

Berechnen einer Mehrzahl von elementweisen Merkmalskarten basierend auf den verketteten Daten unter Verwendung des zweiten CNN;

Berechnen einer Mehrzahl von Fusionsmerkmalskarten durch Multiplizieren jeder der Mehrzahl von elementweisen Merkmalskarten mit den entsprechenden Merkmalskarten des aufmerksamen Einbettungsnetzwerks;

Berechnen einer abgeflachten Merkmalskarte basierend auf der Mehrzahl von Fusionsmerkmalskarten unter Verwendung des zweiten CNN;

Erzeugen eines zusammengesetzten Merkmalsvektors durch Verketten der abgeflachten Merkmalskarte, der Mehrzahl von Robotergelenkzuständen und der Mehrzahl von Robotergelenkgeschwindigkeiten;

Berechnen einer ersten Steueraktion basierend auf dem zusammengesetzten Merkmalsvektor unter Verwendung von vollständig verbundenen Schichten;

Berechnen einer zweiten Steueraktion basierend auf dem zusammengesetzten Merkmalsvektor unter Verwendung von vollständig verbundenen Schichten;

Berechnen einer Gesamt-Verhaltens-Klonungs-Verlustfunktion basierend auf der ersten Steueraktion und der zweiten Steueraktion; und

Trainieren des Steuernetzwerks basierend auf der Gesamt-Verhaltens-Klonungs-Verlustfunktion.

**6.** System (100) zum aufmerksamen One-Shot-Metaimitationslernen aus einer visuellen Demonstration, umfassend:

mindestens einen Speicher (104), der programmierte Anweisungen speichert;

eine oder mehrere Eingabe/Ausgabe(E/A)-Schnittstellen (112); und

einen oder mehrere Hardwareprozessoren (102), die operativ mit dem mindestens einen Speicher (104) gekoppelt sind, wobei der eine oder die mehreren Hardwareprozessoren (102) durch die programmierten Anweisungen konfiguriert sind zum:

Empfangen einer Mehrzahl von Bildern, die sich auf die visuelle Demonstration eines Roboters beziehen, der eine Aufgabe ausführt, wobei die Mehrzahl von Bildern sequenziell ist und eine neue Aufgabe aus der visuellen Demonstration durch aufmerksames One-Shot-Metaimitationslernen gelernt wird;

Berechnen einer Mehrzahl von Vektoreinbettungen basierend auf der Mehrzahl von Bildern unter Verwendung eines vortrainierten aufmerksamen Einbettungsnetzwerks, wobei

das vortrainierte aufmerksame Einbettungsnetzwerk für eine Menge von Aufgaben vortrainiert ist,

die Menge von Aufgaben keine neue Aufgabe beinhaltet,

das vortrainierte aufmerksame Einbettungsnetzwerk umfasst: ein erstes Convolutional Neural Network, CNN, eine vollständig verbundene Schicht und eine Mehrzahl von räumlichen Aufmerksamkeitsmodulen, und

das erste CNN eine innerste Schicht ist,

die vollständig verbundene Schicht eine äußerste Schicht ist,

die Mehrzahl von räumlichen Aufmerksamkeitsmodulen zwischen dem ersten CNN und der vollständig verbundenen Schicht ist, und

die Berechnung der Mehrzahl von Vektoreinbettungen ferner umfasst:

Berechnen einer Mehrzahl von lokalen Kontextmerkmalsvektoren basierend auf der Mehrzahl von Bildern durch das erste CNN;

Berechnen einer Mehrzahl von Aufmerksamkeitsvektoren basierend auf der Mehrzahl von lokalen Kontextmerkmalsvektoren und einem aktuellen globalen Merkmalsvektor unter Verwendung eines entsprechenden räumlichen Aufmerksamkeitsmoduls unter der Mehrzahl von räumlichen Aufmerksamkeitsmodulen;

Berechnen einer Mehrzahl von elementweisen Punktprodukten, die ein elementweises Punktprodukt zwischen jedem der Mehrzahl von Aufmerksamkeitsvektoren und jedem einer entsprechenden Mehrzahl von lokalen Kontextmerkmalsvektoren umfassen;

Erzeugen eines neuen globalen Vektors durch Verketten der Mehrzahl von elementweisen Punktprodukten; und

Berechnen der Mehrzahl von Vektoreinbettungen basierend auf dem neuen globalen Vektor unter Verwendung der vollständig verbundenen Schicht des aufmerksamen Einbettungsnetzwerks; und

Berechnen, einer Steueraktion basierend auf der Mehrzahl von Vektoreinbettungen, eines Bildes, das zufällig aus der Mehrzahl von Bildern ausgewählt wird, eines Robotergelenkzustandsvektors und eines Robotergelenkgeschwindigkeitsvektors unter Verwendung eines vortrainierten Steuernetzwerks, wobei das Berechnen der Steueraktion basierend auf der Mehrzahl von Vektoreinbettungen, dem ausgewählten Bild, dem Robotergelenkzustandsvektor und dem Robotergelenkgeschwindigkeitsvektor unter Verwendung des vortrainierten Steuernetzwerks umfasst:

Empfangen der Mehrzahl von Vektoreinbettungen, des ausgewählten Bildes, des Robotergelenkzustandsvektors und des Robotergelenkgeschwindigkeitsvektors als Eingabe durch das vortrainierte Steuernetzwerk;

Kacheln der Mehrzahl von Vektoreinbettungen entsprechend einer Größe, die dem ausgewählten Bild zugeordnet ist;

Erhalten, im Anschluss an das Kacheln, von verketteten Daten durch Verketten der Mehrzahl von gekachelten Vektoreinbettungen und des ausgewählten Bildes;

Berechnen, im Anschluss an die Verkettung, einer Mehrzahl von elementweisen Merkmalskarten basierend auf den verketteten Daten unter Verwendung eines zweiten CNN;

Berechnen einer Mehrzahl von Fusionsmerkmalskarten durch Multiplizieren jeder der Mehrzahl von elementweisen Merkmalskarten mit entsprechenden Merkmalskarten des aufmerksamen Einbettungsnetzwerks;

Berechnen, nach der Berechnung der Fusionsmerkmalskarten, einer abgeflachten Merkmalskarte basierend auf der Mehrzahl von Fusionsmerkmalskarten unter Verwendung des zweiten CNN;

Erzeugen eines zusammengesetzten Merkmalsvektors durch Verketten der abgeflachten Merkmalskarte, des Robotergelenkzustandsvektors und des Robotergelenkgeschwindigkeitsvektors; und

Berechnen der Steueraktion basierend auf dem zusammengesetzten Merkmalsvektor unter Verwendung einer Mehrzahl von vollständig verbundenen Schichten des vortrainierten Steuernetzwerks, und wobei das vortrainierte Steuernetzwerk das zweite CNN und die Mehrzahl von vollständig verbundenen Schichten umfasst, und wobei das vortrainierte Steuernetzwerk mit der aufmerksamen Einbettung unter Verwendung von multiplikativen räumlichen Sprungverbindungen verbunden ist.

7. System nach Anspruch 6, wobei jedes der Mehrzahl von räumlichen Aufmerksamkeitsmodulen eine Additionseinheit, eine Faltungseinheit und eine Sigmoid-Aktivierungsfunktion umfasst, wobei der neue globale Vektor von einer letzten Schicht des ersten CNN erhalten wird.

8. System nach Anspruch 6, wobei das vortrainierte aufmerksame Einbettungsnetzwerk und das vortrainierte Steuernetzwerk mit einem benutzerdefinierten Datensatz getestet werden, der einen komplexen Hintergrund umfasst.

9. System nach Anspruch 6, wobei der eine oder die mehreren Hardwareprozessoren (102) durch die programmierten Anweisungen konfiguriert sind zum:

Empfangen eines Unterstützungsdatensatzes und eines Abfragedatensatzes, wobei der Unterstützungsdatensatz die Mehrzahl von sequenziellen Bildern umfasst, die einer Mehrzahl von Aufgaben entsprechen, und wobei der Abfragedatensatz die Mehrzahl von sequenziellen Bildern umfasst, die sich auf eine spezifische Aufgabe beziehen;

Berechnen einer ersten Mehrzahl von Vektoreinbettungen, die jeder der Mehrzahl von Aufgaben entsprechen, die dem Unterstützungsdatensatz zugeordnet sind, unter Verwendung des aufmerksamen Einbettungsnetzwerks;

Normalisieren der ersten Mehrzahl von Vektoreinbettungen, die dem Unterstützungsdatensatz zugeordnet sind, unter Verwendung einer Normalisierungstechnik;

Berechnen einer zweiten Mehrzahl von Vektoreinbettungen, die jeder der Mehrzahl von Aufgaben entsprechen, die dem Abfragedatensatz zugeordnet sind, unter Verwendung des aufmerksamen Einbettungsnetzwerks;

Berechnen der Punktproduktähnlichkeit zwischen der normalisierten ersten Mehrzahl von Vektoreinbettungen und der zweiten Mehrzahl von Vektoreinbettungen; und

Trainieren des aufmerksamen Einbettungsnetzwerks basierend auf der berechneten Punktproduktähnlichkeit, wobei das Training fortgesetzt wird, bis die Punktproduktähnlichkeit zwischen der ersten Mehrzahl von normalisierten Vektoreinbettungen und der zweiten Mehrzahl von Vektoreinbettungen größer als ein vordefinierter Ähnlichkeitsschwellenwert ist.

10. System nach Anspruch 6, wobei der eine oder die mehreren Hardwareprozessoren (102) durch die programmierten Anweisungen konfiguriert sind zum:

Empfangen der Mehrzahl von Vektoreinbettungen, eines Bildes aus einem Abfragedatensatz, der Mehrzahl von Robotergelenkzustandsvektoren und der Mehrzahl von Robotergelenkgeschwindigkeitsvektoren;

Kacheln der Mehrzahl von Vektoreinbettungen entsprechend einer Größe, die dem Bild zugeordnet ist, wobei das Bild zufällig aus dem Abfragedatensatz ausgewählt wird;

Erhalten der verketteten Daten durch Verketten der Mehrzahl von gekachelten Vektoreinbettungen und des Bildes;

Berechnen einer Mehrzahl von elementweisen Merkmalskarten basierend auf den verketteten Daten unter Verwendung des zweiten CNN;

Berechnen einer Mehrzahl von Fusionsmerkmalskarten durch Multiplizieren jeder der Mehrzahl von elementweisen Merkmalskarten mit den entsprechenden Merkmalskarten des aufmerksamen Einbettungsnetzwerks;

Berechnen einer abgeflachten Merkmalskarte basierend auf der Mehrzahl von Fusionsmerkmalskarten unter Verwendung des zweiten CNN;

Erzeugen eines zusammengesetzten Merkmalsvektors durch Verketten der abgeflachten Merkmalskarte, der Mehrzahl von Robotergelenkzuständen und der Mehrzahl von Robotergelenkgeschwindigkeiten;

Berechnen einer ersten Steueraktion basierend auf dem zusammengesetzten Merkmalsvektor unter Verwendung von vollständig verbundenen Schichten;

Berechnen einer zweiten Steueraktion basierend auf dem zusammengesetzten Merkmalsvektor unter Verwendung von vollständig verbundenen Schichten;

Berechnen einer Gesamt-Verhaltens-Klonungs-Verlustfunktion basierend auf der ersten Steueraktion und der zweiten Steueraktion; und

Trainieren des Steuernetzwerks basierend auf der Gesamt-Verhaltens-Klonungs-Verlustfunktion.

11. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, den einen oder die mehreren Hardwareprozessoren veranlassen, das Verfahren nach Anspruch 1 auszuführen.

12. Ein oder mehrere nichtflüchtige maschinenlesbare Informationsspeichermedien nach Anspruch 11, wobei jedes der Mehrzahl von räumlichen Aufmerksamkeitsmodulen eine Additionseinheit, eine Faltungseinheit und eine Sigmoid-Aktivierungsfunktion umfasst, wobei der neue globale Vektor von einer letzten Schicht des ersten CNN erhalten wird.

13. Ein oder mehrere nichtflüchtige maschinenlesbare Informationsspeichermedien nach Anspruch 11, wobei das vortrainierte aufmerksame Einbettungsnetzwerk und das vortrainierte Steuernetzwerk mit einem benutzerdefinierten Datensatz getestet werden, der einen komplexen Hintergrund umfasst.

**Revendications**

1. Procédé mis en oeuvre par processeur (200) pour un apprentissage attentif par méta-imitation en un coup à partir d'une démonstration visuelle, comprenant :

la réception (202), par un ou plusieurs processeurs matériels (102), d'une pluralité d'images se rapportant à la démonstration visuelle d'un robot effectuant une tâche, dans lequel la pluralité d'images est séquentielle, dans lequel une nouvelle tâche est apprise à partir de la démonstration visuelle par un apprentissage attentif par méta-imitation en un coup ;

le calcul (204), par les un ou plusieurs processeurs matériels (102), d'une pluralité d'encodages vectoriels sur la base de la pluralité d'images en utilisant un réseau d'encodage attentif préentraîné, dans lequel

le réseau d'encodage attentif préentraîné est préentraîné pour un ensemble de tâches,

l'ensemble de tâches n'inclut pas une nouvelle tâche,
le réseau d'encodage attentif préentraîné comprend :

un premier réseau neuronal convolutif (CNN),

une couche entièrement connectée (318), et
une pluralité de modules d'attention spatiale (314A-314C), et
le premier CNN est une couche la plus interne,
la couche entièrement connectée (318) est une couche la plus externe,
la pluralité de modules d'attention spatiale (314A-314C) est entre le premier CNN et la couche entièrement connectée (318), et
le calcul de la pluralité d'encodages vectoriels comprend en outre :

le calcul d'une pluralité de vecteurs de caractéristiques contextuelles locales sur la base de la pluralité d'images par le premier CNN ;
le calcul d'une pluralité de vecteurs d'attention sur la base de la pluralité de vecteurs de caractéristiques contextuelles locales et d'un vecteur de caractéristiques global actuel en utilisant un module d'attention spatiale correspondant parmi la pluralité de modules d'attention spatiale ;
le calcul d'une pluralité de produits scalaires élémentaires comprenant un produit scalaire élémentaire entre chacun de la pluralité de vecteurs d'attention et chacun d'une pluralité correspondante de vecteurs de caractéristiques contextuelles locales ;
la génération d'un nouveau vecteur global par concaténation de la pluralité de produits scalaires élémentaires ; et
le calcul de la pluralité d'encodages vectoriels sur la base du nouveau vecteur global en utilisant la couche entièrement connectée du réseau d'encodage attentif ; et

le calcul (206), par les un ou plusieurs processeurs matériels (102), d'une action de contrôle sur la base de la pluralité d'encodages vectoriels, d'une image sélectionnée au hasard parmi la pluralité d'images, d'un vecteur d'état articulaire de robot et d'un vecteur de vitesse articulaire de robot en utilisant un réseau de contrôle préentraîné, dans lequel le calcul de l'action de contrôle est basé sur la pluralité d'encodages vectoriels, l'image sélectionnée, le vecteur d'état articulaire de robot et le vecteur de vitesse articulaire de robot en utilisant le réseau de contrôle préentraîné, comprend :

la réception de la pluralité d'encodages vectoriels, de l'image sélectionnée, du vecteur d'état articulaire de robot et du vecteur de vitesse articulaire de robot en tant qu'entrée par le réseau de contrôle préentraîné ;
le redimensionnement de la pluralité d'encodages vectoriels correspondant à une taille associée à l'image sélectionnée ;
l'obtention, suite au redimensionnement, de données concaténées par concaténation de la pluralité d'encodages vectoriels redimensionnés et de l'image sélectionnée ;
le calcul, suite à la concaténation, d'une pluralité de cartes de caractéristiques élémentaires sur la base des données concaténées en utilisant un second CNN ;
le calcul d'une pluralité de cartes de caractéristiques fusionnées par multiplication de chacune de la pluralité de cartes de caractéristiques élémentaires avec une carte de caractéristiques correspondante du réseau d'encodage attentif ;
le calcul, après le calcul des cartes de caractéristiques fusionnées, d'une carte de caractéristiques aplatie sur la base de la pluralité de cartes de caractéristiques fusionnées en utilisant le second CNN ;
la génération d'un vecteur de caractéristiques composite par concaténation de la carte de caractéristiques aplatie, du vecteur d'état articulaire de robot et du vecteur de vitesse articulaire de robot ; et
le calcul, de l'action de contrôle sur la base du vecteur de caractéristiques composite en utilisant une pluralité de couches entièrement connectées du réseau de contrôle préentraîné, et dans lequel le réseau de contrôle préentraîné comprend le second CNN et la pluralité de couches entièrement connectées, et dans lequel le réseau de contrôle préentraîné est connecté au réseau d'encodage attentif en utilisant des connexions spatial multiplicatives.

2.	Procédé mis en oeuvre par processeur selon la revendication 1, dans lequel chacun de la pluralité de modules d'attention spatiale comprend une unité d'addition, une unité de convolution et une fonction d'activation sigmoïde, dans lequel le nouveau vecteur global est obtenu à partir d'une couche finale du premier CNN.

3.	Procédé mis en oeuvre par processeur selon la revendication 1, dans lequel le réseau d'encodage attentif préentraîné et le réseau de contrôle sont testés avec un ensemble de données personnalisé comprenant en outre un arrière-plan complexe.

4.	Procédé mis en oeuvre par processeur selon la revendication 1, dans lequel le procédé comprend :

la réception d'un ensemble de données de support et d'un ensemble de données de requête, dans lequel l'ensemble de données de support comprend la pluralité d'images séquentielles correspondant à une pluralité de tâches, et dans lequel l'ensemble de données de requête comprend la pluralité d'images séquentielles se rapportant à une tâche spécifique ;
le calcul d'une première pluralité d'encodages vectoriels correspondant à chacune de la pluralité de tâches associées à l'ensemble de données de support en utilisant le réseau d'encodage attentif ;
la normalisation de la première pluralité d'encodages vectoriels associées à l'ensemble de données de support en utilisant une technique de normalisation ;
le calcul d'une seconde pluralité d'encodages vectoriels correspondant à chacune de la pluralité de tâches associées à l'ensemble de données de requête en utilisant le réseau d'encodage attentif ;
le calcul de la similarité par produit scalaire entre la première pluralité normalisée d'encodages vectoriels et la seconde pluralité d'encodages vectoriels ; et
l'entraînement du réseau d'encodage attentif sur la base de la similarité de produit scalaire calculée, dans lequel l'entraînement est poursuivi jusqu'à ce que la similarité de produit scalaire entre la première pluralité d'encodages vectoriels normalisés et la seconde pluralité d'encodages vectoriels soit supérieure à un seuil de similarité prédéfini.

5.	Procédé mis en oeuvre par processeur selon la revendication 1, dans lequel le procédé comprend :

la réception de la pluralité d'encodages vectoriels, d'une image à partir d'un ensemble de données de requête, de la pluralité de vecteurs d'état articulaire de robot et de la pluralité de vecteurs de vitesse articulaire de robot ;
le redimensionnement de la pluralité d'encodages vectoriels correspondant à une taille associée à l'image, dans lequel l'image est sélectionnée aléatoirement à partir de l'ensemble de données de requête ;
l'obtention des données concaténées par concaténation de la pluralité d'encodages vectoriels redimensionnés et de l'image ;
le calcul d'une pluralité de cartes de caractéristiques élémentaires sur la base des données concaténées en utilisant le second CNN ;
le calcul d'une pluralité de cartes de caractéristiques fusionnées par multiplication de chacune de la pluralité de cartes de caractéristiques élémentaires avec les cartes de caractéristiques correspondantes du réseau d'encodage attentif ;
le calcul d'une carte de caractéristiques aplatie sur la base de la pluralité de cartes de caractéristiques fusionnées en utilisant le second CNN ;
la génération d'un vecteur de caractéristiques composite par concaténation de la carte de caractéristiques aplatie, de la pluralité d'états articulaires de robot et de la pluralité de vitesses articulaires de robot ;
le calcul d'une première action de contrôle sur la base du vecteur de caractéristiques composite en utilisant des couches entièrement connectées ;
le calcul d'une seconde action de contrôle sur la base du vecteur de caractéristiques composite en utilisant des couches entièrement connectées ;
le calcul d'une fonction de perte totale d'imitation comportementale sur la base de la première action de contrôle et de la seconde action de contrôle ; et
l'entraînement du réseau de contrôle sur la base de la fonction de perte totale d'imitation comportementale.

6.	Système (100) pour un apprentissage attentif par méta-imitation en un seul coup à partir d'une démonstration visuelle, comprenant :

au moins une mémoire (104) stockant des instructions programmées ;
une ou plusieurs interfaces d'entrée/sortie (E/S) (112) ; et
un ou plusieurs processeurs matériels (102) couplés de manière opérationnelle à l'au moins une mémoire (104), dans lequel les un ou plusieurs processeurs matériels (102) sont configurés par les instructions programmées pour :

la réception d'une pluralité d'images se rapportant à la démonstration visuelle d'un robot effectuant une tâche, dans lequel la pluralité d'images est séquentielle, dans lequel une nouvelle tâche est apprise à partir de la démonstration visuelle par un apprentissage attentif par méta-imitation en un coup ;
le calcul d'une pluralité d'encodages vectoriels sur la base de la pluralité d'images en utilisant un réseau d'encodage attentif préentraîné, dans lequel

le réseau d'encodage attentif préentraîné est préentraîné pour un ensemble de tâches, l'ensemble de tâches n'inclut pas une nouvelle tâche,
le réseau d'encodage attentif préentraîné comprend :

un premier réseau neuronal convolutif (CNN),

une couche entièrement connectée, et
une pluralité de modules d'attention spatiale, et
le premier CNN est une couche la plus interne,
la couche entièrement connectée est une couche la plus externe,
la pluralité de modules d'attention spatiale est entre le premier CNN et la couche entièrement connectée, et
le calcul de la pluralité d'encodages vectoriels comprend en outre :

le calcul d'une pluralité de vecteurs de caractéristiques contextuelles locales sur la base de la pluralité d'images par le premier CNN ;
le calcul d'une pluralité de vecteurs d'attention sur la base de la pluralité de vecteurs de caractéristiques contextuelles locales et d'un vecteur de caractéristiques global actuel en utilisant un module d'attention spatiale correspondant parmi la pluralité de modules d'attention spatiale ;
le calcul d'une pluralité de produits scalaires élémentaires comprenant un produit scalaire élémentaire entre chacun de la pluralité de vecteurs d'attention et chacun d'une pluralité correspondante de vecteurs de caractéristiques contextuelles locales ;
la génération d'un nouveau vecteur global par concaténation de la pluralité de produits scalaires élémentaires ; et
le calcul de la pluralité d'encodages vectoriels sur la base du nouveau vecteur global en utilisant la couche entièrement connectée du réseau d'encodage attentif ; et

le calcul, par les un ou plusieurs processeurs matériels, d'une action de contrôle sur la base de la pluralité d'encodages vectoriels, d'une image sélectionnée au hasard parmi la pluralité d'images, d'un vecteur d'état articulaire de robot et d'un vecteur de vitesse articulaire de robot en utilisant un réseau de contrôle préentraîné, dans lequel le calcul de l'action de contrôle est basé sur la pluralité d'encodages vectoriels, l'image sélectionnée, le vecteur d'état articulaire de robot et le vecteur de vitesse articulaire de robot en utilisant le réseau de contrôle préentraîné, comprend :

la réception de la pluralité d'encodages vectoriels, de l'image sélectionnée, du vecteur d'état articulaire de robot et du vecteur de vitesse articulaire de robot en tant qu'entrée par le réseau de contrôle préentraîné ;
le redimensionnement de la pluralité d'encodages vectoriels correspondant à une taille associée à l'image sélectionnée ;
l'obtention, suite au redimensionnement, de données concaténées par concaténation de la pluralité d'encodages vectoriels redimensionnés et de l'image sélectionnée ;
le calcul, suite à la concaténation, d'une pluralité de cartes de caractéristiques élémentaires sur la base des données concaténées en utilisant un second CNN ;
le calcul d'une pluralité de cartes de caractéristiques fusionnées par multiplication de chacune de la pluralité de cartes de caractéristiques élémentaires avec une carte de caractéristiques correspondante du réseau d'encodage attentif ;
le calcul, après le calcul des cartes de caractéristiques fusionnées, d'une carte de caractéristiques aplatie sur la base de la pluralité de cartes de caractéristiques fusionnées en utilisant le second CNN ;

la génération d'un vecteur de caractéristiques composite par concaténation de la carte de caractéristiques aplatie, du vecteur d'état articulaire de robot et du vecteur de vitesse articulaire de robot ; et

le calcul, de l'action de contrôle sur la base du vecteur de caractéristiques composite en utilisant une pluralité de couches entièrement connectées du réseau de contrôle préentraîné, et dans lequel le réseau de contrôle préentraîné comprend le second CNN et la pluralité de couches entièrement connectées, et dans lequel le réseau de contrôle préentraîné est connecté au réseau d'encodage attentif en utilisant des connexions spatial multiplicatives.

7. Système selon la revendication 6, dans lequel chacun de la pluralité de modules d'attention spatiale comprend une unité d'addition, une unité de convolution et une fonction d'activation sigmoïde, dans lequel le nouveau vecteur global est obtenu à partir d'une couche finale du premier CNN.

8. Système selon la revendication 6, dans lequel le réseau d'encodage attentif préentraîné et le réseau de contrôle sont testés avec un ensemble de données personnalisé comprenant en outre un arrière-plan complexe.

9. Système selon la revendication 6, dans lequel les un ou plusieurs processeurs matériels (102) sont configurés par les instructions programmées pour :

la réception d'un ensemble de données de support et d'un ensemble de données de requête, dans lequel l'ensemble de données de support comprend la pluralité d'images séquentielles correspondant à une pluralité de tâches, et dans lequel l'ensemble de données de requête comprend la pluralité d'images séquentielles se rapportant à une tâche spécifique ;

le calcul d'une première pluralité d'encodages vectoriels correspondant à chacune de la pluralité de tâches associées à l'ensemble de données de support en utilisant le réseau d'encodage attentif ;

la normalisation de la première pluralité d'encodages vectoriels associées à l'ensemble de données de support en utilisant une technique de normalisation ;

le calcul d'une seconde pluralité d'encodages vectoriels correspondant à chacune de la pluralité de tâches associées à l'ensemble de données de requête en utilisant le réseau d'encodage attentif ;

le calcul de la similarité par produit scalaire entre la première pluralité normalisée d'encodages vectoriels et la seconde pluralité d'encodages vectoriels ; et

l'entraînement du réseau d'encodage attentif sur la base de la similarité de produit scalaire calculée, dans lequel l'entraînement est poursuivi jusqu'à ce que la similarité de produit scalaire entre la première pluralité d'encodages vectoriels normalisés et la seconde pluralité d'encodages vectoriels soit supérieure à un seuil de similarité prédéfini.

10. Système selon la revendication 6, dans lequel les un ou plusieurs processeurs matériels (102) sont configurés par les instructions programmées pour :

la réception de la pluralité d'encodages vectoriels, d'une image à partir d'un ensemble de données de requête, de la pluralité de vecteurs d'état articulaire de robot et de la pluralité de vecteurs de vitesse articulaire de robot ;

le redimensionnement de la pluralité d'encodages vectoriels correspondant à une taille associée à l'image, dans lequel l'image est sélectionnée aléatoirement à partir de l'ensemble de données de requête ;

l'obtention des données concaténées par concaténation de la pluralité d'encodages vectoriels redimensionnés et de l'image ;

le calcul d'une pluralité de cartes de caractéristiques élémentaires sur la base des données concaténées en utilisant le second CNN ;

le calcul d'une pluralité de cartes de caractéristiques fusionnées par multiplication de chacune de la pluralité de cartes de caractéristiques élémentaires avec les cartes de caractéristiques correspondantes du réseau d'encodage attentif ;

le calcul d'une carte de caractéristiques aplatie sur la base de la pluralité de cartes de caractéristiques fusionnées en utilisant le second CNN ;

la génération d'un vecteur de caractéristiques composite par concaténation de la carte de caractéristiques aplatie, de la pluralité d'états articulaires de robot et de la pluralité de vitesses articulaires de robot ;

le calcul d'une première action de contrôle sur la base du vecteur de caractéristiques composite en utilisant des couches entièrement connectées ;

le calcul d'une seconde action de contrôle sur la base du vecteur de caractéristiques composite en utilisant des couches entièrement connectées ;
le calcul d'une fonction de perte totale d'imitation comportementale sur la base de la première action de contrôle et de la seconde action de contrôle ; et
l'entraînement du réseau de contrôle sur la base de la fonction de perte totale d'imitation comportementale.

11. Un ou plusieurs supports de stockage d'informations lisibles par machine non transitoires comprenant une ou plusieurs instructions qui, lorsqu'elles sont exécutées par un ou plusieurs processeurs matériels, amènent les un ou plusieurs processeurs matériels à effectuer le procédé selon la revendication 1.

12. Un ou plusieurs supports de stockage d'informations lisibles par machine non transitoires selon la revendication 11, dans lequel chacun de la pluralité de modules d'attention spatiale comprend une unité d'addition, une unité de convolution et une fonction d'activation sigmoïde, dans lequel le nouveau vecteur global est obtenu à partir d'une couche finale du premier CNN.

13. Un ou plusieurs supports de stockage d'informations lisibles par machine non transitoires selon la revendication 11, dans lequel le réseau d'encodage attentif préentraîné et le réseau de contrôle sont testés avec un ensemble de données personnalisé comprenant en outre un arrière-plan complexe.

100

MEMORY 104

MODULES 106

REPOSITORY 110

108

I/O INTERFACE
112

HARDWARE
PROCESSORS
102

FIG. 1

200

receive a plurality of images pertaining to a visual demonstration for a robot, wherein the plurality of images are sequential ⟋ 202

compute a plurality of vector embeddings based on the plurality of images using a pretrained attentive embedding network, wherein the pretrained attentive embedding network comprises a first Convolutional Neural Network (CNN), a fully connected layer and a plurality of spatial attention modules, by: (i) computing a plurality of local contextual feature vectors based on the plurality of images by the first CNN (ii) computing a plurality of attention vectors based on the plurality of local contextual feature vectors and a current global feature vector using the corresponding spatial attention module (iii) computing an elementwise dot product between each of the plurality of attention vectors and each of the corresponding plurality of local contextual feature vector (iv) generating a new global vector by concatenating a plurality of elementwise dot products and (v) computing the plurality of vector embeddings based on the new global vector using the fully connected layer of the attentive embedding network ⟋ 204

compute a control action based on the plurality of vector embeddings, an image from the plurality of images, a robot joint state vector, a robot joint velocity vector using a control network, wherein the control network comprises a second CNN and a plurality of fully connected layers and, wherein the control network is connected to the attentive embedding using multiplicative spatial skip connections ⟋ 206

**FIG. 2**

300

Multiplicative Skip connections

302

304

| Images | Attentive embedding Network | Vector Embeddings | Control Network | Control actions |

Channel wise images

**FIG. 3A**

**FIG. 3B**

304

A
B
C
D

330A  330B  330C  330D

X  X  X  X

Convolution filter  Feature map  Convolution filter  Feature map  Convolution filter  Feature map  Convolution filter  Feature map

332A  332B  332C  332D

334  Flattened layer

Joint velocity vector  340

338

Fully connected layer

Control action

Joint states vector

336

**FIG. 3C**

314

Local feature

Global feature

+ 342

Convolution filter 344

σ 346

Attention Vector

**FIG. 3D**

**FIG. 4A**

402

408

404

**FIG. 4B**

FIG. 4C

FIG. 4D

**EP 4 184 393 B1**

REFERENCES CITED IN THE DESCRIPTION

**Patent documents cited in the description**

- IN 202121052813

- US 20210205988 A1